# FASCICULE DE BREVET EUROPEEN

(11) **EP 4 002 684 B1**
(45) Date de publication et mention de la délivrance du brevet: **19.07.2023**
(21) Numéro de dépôt: 21208388.5
(22) Date de dépôt: 16.11.2021
(51) Int. Cl.: H02S 20/26

(54) **STRUCTURE PHOTOVOLTAÏQUE DESTINÉE À COUVRIR AU MOINS UNE PARTIE D'AU MOINS UNE FAÇADE D'UN BATIMENT**
FOTOVOLTAIKSTRUKTUR ZUM BEDECKEN VON MINDESTENS EINEM TEIL MINDESTENS EINER GEBÄUDEFASSADE
PHOTOVOLTAIC STRUCTURE INTENDED FOR COVERING AT LEAST ONE PORTION OF AT LEAST ONE FAÇADE OF A BUILDING

(30) Priorité: 23.11.2020 FR 2012015
(43) Date de publication de la demande: 25.05.2022
(73) Titulaire: Commissariat à l'énergie atomique et aux énergies alternatives, 75015 Paris (FR)
(72) Inventeur: CHAINTREUIL, Nicolas, 38054 GRENOBLE CEDEX 09 (FR); BRUN, Adrien, 38054 GRENOBLE CEDEX 09 (FR); CLAUDON, Fabrice, 38054 GRENOBLE CEDEX 09 (FR)
(74) Mandataire: Brevalex

(56) Documents cités:
- EP-A1- 2 645 013
- KR-A- 20190 095 725
- KR-A- 20200 006 161
- US-A1- 2010 183 443

## Description

### DOMAINE TECHNIQUE ET ÉTAT DE LA TECHNIQUE ANTÉRIEURE

La présente invention se rapporte à une structure photovoltaïque destinée à être montée le long d'au moins une partie d'au moins une façade d'un bâtiment, notamment d'une maison individuelle.

Les modules photovoltaïques en vue de générer de l'électricité sont généralement montés sur les toits des bâtiments. Or les façades des bâtiments offrent des surfaces importantes disponibles pour recevoir ces modules. Une implantation sur plusieurs façades du bâtiment, par exemple sur les façades orientées à l'est, au sud et à l'ouest, permet en outre de maximiser le temps pendant lequel de l'électricité est produite au cours de la journée.

Les modules photovoltaïques peuvent être fixés directement sur la façade, ou via une structure intermédiaire fixée sur la façade. Or pour les constructions nouvelles et pour les bâtiments rénovés, l'isolation thermique se fait généralement par l'extérieur, i.e. un matériau isolant thermique généralement sous forme de plaque est fixé par exemple sur le mur en béton ou en brique. Il n'est pas possible de fixer les modules ou une structure porteuse dans le matériau d'isolation thermique qui n'est pas suffisamment résistant d'un point de vue mécanique. Le document CN 103806580 décrit une structure porteuse de modules photovoltaïques qui est fixée au mur en béton ou en brique au moyen de vis qui traversent toutes l'épaisseur de l'isolant thermique. Or l'isolant thermique présente une épaisseur importante, plusieurs centimètres, par exemple 10 cm, ce qui implique la mise en oeuvre de vis longues, la structure se trouve alors en porte-à-faux et les vis subissent alors un effort de cisaillement important.

En outre, le montage peut être complexe et peut détériorer l'isolation thermique Le document KR 20200006161 A décrit des modules photovoltaïques selon l'art antérieur.

### EXPOSÉ DE L'INVENTION

C'est par conséquent un but de la présente invention d'offrir une structure photovoltaïque ne présentant pas les inconvénients ci-dessus.

C'est également un but de la présente invention d'offrir une structure photovoltaïque destinée à couvrir au moins une partie d'au moins une façade d'un bâtiment de montage simplifiée
Le but énoncé ci-dessus est atteint par une structure photovoltaïque comportant au moins un mât destiné à être orienté verticalement le long de la façade, au moins un module photovoltaïque fixé au mât, le mât comportant des moyens de fixation à ses extrémités longitudinales de sorte à fixer le mât le long d'au moins une façade d'un bâtiment.

La structure selon l'invention est autoportante grâce à la mise en oeuvre d'au moins un mât et ne requiert pas la fixation à travers l'isolant thermique. Par exemple l'extrémité longitudinale inférieure du mât est fixée dans la semelle de fondation du bâtiment et l'extrémité longitudinale supérieure du mât est fixée au débord du toit du bâtiment.

La structure est particulièrement avantageuse pour un montage le long des angles d'un bâtiment dans lesquels une fixation au mur devient très complexe. La structure comporte par exemple trois mâts, un premier mât courant le long de la jonction entre les deux façades, un deuxième mât courant le long d'une des façades et le troisième mât courant le long de l'autre façade et des modules étant montés entre ou sur le premier mât et le deuxième mât et le premier mât et le troisième mât.

De manière préférée, les moyens de connexion électrique des modules photovoltaïques sont portés en partie ou complètement par le ou les mâts.

Un des objets de la présente demande est une structure photovoltaïque destinée à couvrir au moins une partie d'une façade d'un bâtiment, comportant au moins un mât présentant un axe longitudinal destiné à être orienté verticalement et des modules photovoltaïques fixés au mât, ledit mât étant autoporteur et comportant une première extrémité longitudinale inférieure configurée pour être fixée au sol et une deuxième extrémité longitudinale supérieure configurée pour être fixée à une partie supérieure du bâtiment.

De manière préférée, la structure photovoltaïque comporte des moyens de connexion électrique des modules photovoltaïques à une installation extérieure intégrés dans le au moins un mât.

Dans un exemple de réalisation, la structure photovoltaïque comporte des premiers modules photovoltaïques d'un côté de l'axe longitudinal du mât, et des deuxièmes modules photovoltaïques de l'autre côté de l'axe longitudinal du mât, les premiers et deuxièmes modules photovoltaïques étant orientés l'un par rapport à l'autre de sorte à former entre eux un angle et de sorte que, lorsque le mât est monté le long d'un angle du bâtiment, les premiers modules photovoltaïques couvrent une partie d'une première façade et les deuxièmes modules photovoltaïques couvrent une partie d'une deuxième façade, la première et la deuxième façades se rejoignant au niveau dudit angle.

Très avantageusement, es modules photovoltaïques sont montés mobiles en rotation sur le mât autour de l'axe longitudinal du mât de sorte à pouvoir modifier leur orientation angulaire autour du mât. La structure photovoltaïque peut comporter des moyens motorisés configurés pour modifier l'orientation des modules photovoltaïques.

Dans un exemple de réalisation, le au moins un mât et les modules photovoltaïques sont configurés de sorte que les modules photovoltaïques soient aptes à coulisser verticalement le long du mât jusqu'à atteindre l'emplacement souhaité.

La structure peut comporter au moins une rainure longitudinale formée dans le mât, au moins un chariot monté coulissant dans la rainure, un module photovoltaïque étant fixé au chariot, et des moyens de verrouillage du module le long du mât. Par exemple, les moyens de verrouillage comportent au moins un doigt porté par le chariot, ledit doigt mobile dans une direction transversale à l'axe longitudinal du mât et rappeler élastiquement vers l'extérieur, et des fenêtres dans le mât aux différents emplacements des modules photovoltaïques le long du mât, ledit doigt étant configuré pour coopérer avec lesdites fenêtre est verrouiller le module à l'emplacement de ladite fenêtre.

Avantageusement, les moyens de verrouillage sont unidirectionnels, les moyens de verrouillage permettant un déplacement dans un sens du chariot sous l'effet d'un effort dans ledit sens de déplacement le long de la direction longitudinale du mât.

La structure photovoltaïque peut comporter au moins un autre mât de sorte que les modules photovoltaïques soient maintenus par deux bords opposés parallèles.

Selon une caractéristique additionnelle, la structure photovoltaïque comporte un convertisseur pour chaque module photovoltaïque. Le convertisseur peut être un convertisseur sans contact à transfert inductif, comportant un primaire sur une face arrière du module photovoltaïque et un secondaire sur le mât et, lorsque le module photovoltaïque est monté sur le mât, le primaire peut être automatiquement en regard du secondaire.

La structure photovoltaïque peut comporter un module présentant une fonction supplémentaire par rapport aux modules photovoltaïques ou une fonction différente de celle des modules photovoltaïques.

Selon une caractéristique additionnelle, les modules photovoltaïques sont aptes à convertir l'énergie lumineuse sur leurs deux faces.

Un autre objet de la présente demande est un bâtiment comportant plusieurs façades, au moins une structure photovoltaïque selon l'invention recouvrant au moins une partie d'au moins une façade dudit bâtiment, le au moins un mât étant fixé au sol et à une partie supérieure du bâtiment.

Le bâtiment peut comporter une structure photovoltaïque à chaque angle.

Par exemple le bâtiment, comporte une couche d'isolation thermique formant une façade extérieure, la première extrémité longitudinale du au moins un mât est fixée dans une semelle de fondation, et la deuxième extrémité longitudinale du au moins un mât est fixé à un débord du toit.

La au moins une structure peut être posée par rapport à une façade de sorte qu'un jeu existe entre une face arrière des modules photovoltaïques et la façade du bâtiment, par exemple de l'ordre d'un centimètre à quelques centimètres.

Un autre objet de la présente demande est un procédé d'habillage d'au moins une partie d'au moins une façade d'un bâtiment avec une structure photovoltaïque selon l'invention :
- fixation d'un mât le long d'une façade par sa première extrémité longitudinale inférieure et par sa deuxième extrémité longitudinale,
- fixation de modules photovoltaïques le long du mât.

Le mât peut comporter plusieurs sous-ensembles, un premier sous-ensemble étant fixe au sol et les autres sous-ensembles étant empilés sur le premier sous-ensemble, et les modules photovoltaïques peuvent être fixés sur les sous-ensembles avant ou après leur empilage.

Par exemple, le mât est un seul tenant et les modules photovoltaïques sont fixés le long du mât après la fixation du mât le long de la façade.

Le procédé d'habillage peut comporter une étape de connexion électrique des modules photovoltaïques en vue d'une connexion vers une installation extérieure, ladite étape ayant lieu simultanément à l'assemblage mécanique de la structure.

Le au moins un mât peut être disposé le long d'un angle entre deux façades.

Selon un mode d'assemblage, au moins un module est monté dans le mât au niveau d'une partie inférieure du mât et est poussé vers le haut jusqu'à atteindre son emplacement final.

### BRÈVE DESCRIPTION DES DESSINS

La présente invention sera mieux comprise sur la base de la description qui va suivre et des dessins en annexe sur lesquels:
- les figures 1A et 1B sont des vues en perspective d'un exemple de réalisation d'un sous-ensemble d'une structure photovoltaïque dans deux positions.
- la figure 2 est une vue en perspective en éclaté de la structure photovoltaïque obtenue avec les sous-ensembles des figures 1A et 1B sans les modules photovoltaïques.
- la figure 3A est une vue de la figure 2 avec les modules photovoltaïques.
- la figure 3B est une vue en perspective d'une structure photovoltaïque présentant une orientation des modules photovoltaïques différente de celle des modules photovoltaïques de la figure 3A.
- la figure 3C est une vue en perspective d'une structure photovoltaïque présentant une orientation des modules photovoltaïques différente de celle des modules photovoltaïques de la figure 3A.
- la figure 4 est une représentation schématique d'une maison individuelle équipée de la structure de la figure 3A.
- la figure 5 est une vue en perspective d'un autre exemple de structure photovoltaïque.
- la figure 6A est une vue en perspective d'un autre exemple de structure photovoltaïque.
- la figure 6B est une vue en transparence de la structure de la figure 6A.
- la figure 6C est une vue en perspective d'un chariot mis en oeuvre dans la structure de la figure 6A.
- la figure 6D est une vue en coupe transversale de la figure 6A le long du plan A-A.
- la figure 6E est une vue de la figure 6A sans le module.
- les figures 7A à 7E sont différentes vues des différentes étapes d'habillage d'une façade d'une maison individuelle avec la structure de la figure 6A.
- les figures 8A à 8E sont différentes vues des différentes étapes d'habillage d'une façade d'une maison individuelle avec la structure recouvrant un angle d'une maison individuelle.
- la figure 8F est une vue en coupe transversale de la structure de la figure 8E.
- la figure 9A est une en perspective d'une structure photovoltaïque selon un autre exemple de réalisation.
- la figure 9B est une vue en coupe transversale de la structure de la figure 6A le long du plan B-B.
- la figure 10 est une vue en coupe d'un mât d'une structure photovoltaïque.
- la figure 11A est une vue en perspective d'un exemple de connectique.
- la figure 11B est une vue de derrière d'un mât d'une structure photovoltaïque intégrant la connectique de la figure 11A.
- la figure 12A est une vue partielle d'une structure photovoltaïque mettant en oeuvre des convertisseurs sans contact à transfert inductif.
- la figure 12B est une vue en coupe transversale de la structure de la figure 12B le long du plan C-C.
- la figure 13A est une représentation graphique de la variation de puissance produite en Watt au mois de janvier en fonction de l'heure de la journée h par une structure telle que celle de la figure 3A.
- la figure 13B est une représentation graphique de la variation de puissance produite P en Watt au mois de juin en fonction de l'heure de la journée h par une structure telle que celle de la figure 3A.

### EXPOSÉ DÉTAILLÉ DE MODES DE RÉALISATION PARTICULIERS

Dans la description qui va suivre, un module photovoltaïque sera désigné par « module » à des fins de simplicité.

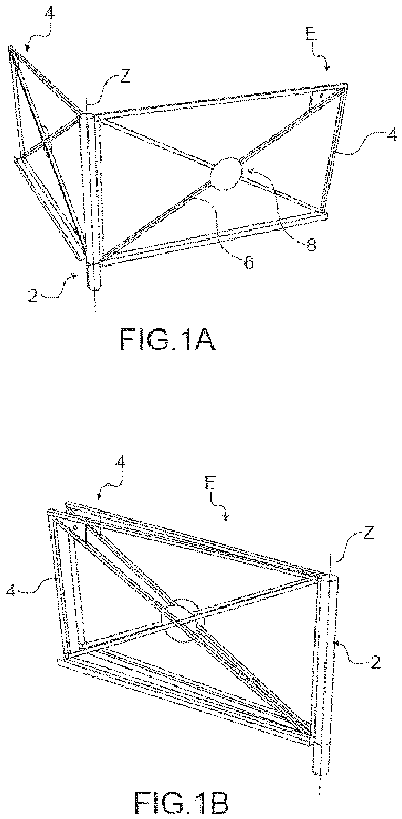

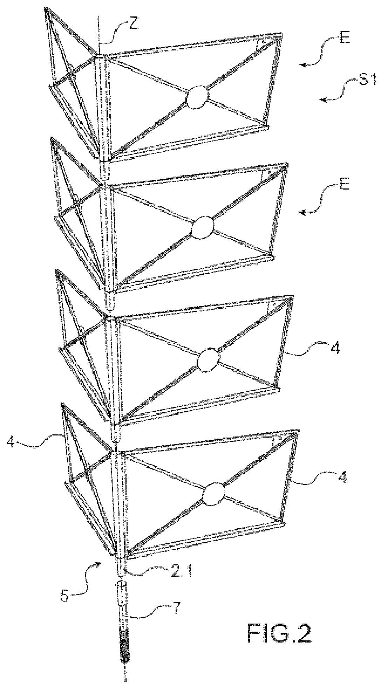

Sur les figures 1A, 1B et 2, on peut voir un premier exemple de réalisation d'une structure photovoltaïque S1 permettant de couvrir au moins en partie les façades d'un bâtiment, notamment les façades d'une maison d'habitation individuelle.

La structure S1 comporte plusieurs sous-ensembles E destinés à être disposés les uns au-dessus des autres de sorte à former la structure complète représentée en éclaté sur la figure 2.

Un sous-ensemble E comporte un montant 2 d'axe Z, et deux cadres porteurs 4 de part et d'autre du montant 2. Un des montants verticaux de chaque cadre est formé par le montant 2. L'axe Z est destiné à être orienté verticalement.

Chaque cadre porteur comporte avantageusement une structure de rigidification 6 formée par deux éléments montés en croix et reliant les sommets du cadre entre eux.

Dans l'exemple représenté, les cadres 4 sont articulés en rotation sur le montant 2 autour de l'axe Z, par exemple des charnières sont prévues entre un bord de chaque cadre 4 et le montant 2.

Le montant 2 est avantageusement creux, de préférence il est formé par un tube, ce qui permet le passage des moyens de connexion électrique des modules. De préférence, la connexion électrique entre les moyens de connexion électrique de chaque montant est automatique lors de l'assemblage des sous-ensembles. Les moyens de connexion électrique peuvent être réalisés à l'aide de connecteurs étanches dédiés ou d'un système de connectique dite « sans contact » par induction.

Dans l'exemple le tube est de section circulaire, en variante il peut avoir une section polygonale, telle que carrée.

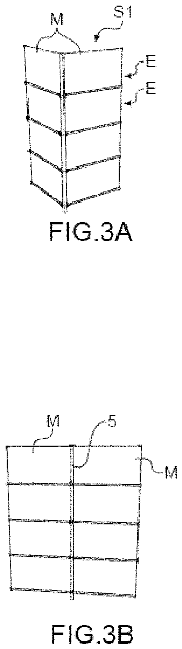

Les modules P représentés sur les figures 3A à 3C, en transparence sont fixés par leur face arrière sur le cadre porteur.

Les extrémités longitudinales du montant vertical 2 sont avantageusement configurées pour coopérer avec les extrémités longitudinales des montants des autres sous-ensembles, de sorte à former un mât 5 autoporteur sur la hauteur de la façade. On entend par « mât autoporteur » un mât qui ne se déforme pas ou peu sous son propre poids et sous le poids du ou des panneaux photovoltaïques, et sans nécessité de maintien mécanique le long de celui-ci.

Dans l'exemple représenté, l'extrémité longitudinale inférieure 2.1 d'un montant 2 forme une partie mâle destinée à pénétrer dans une extrémité longitudinale supérieure formant une partie femelle, du mât du module situé directement en dessous.

L'extrémité longitudinale inférieure du montant du sous-ensemble situé au bas de la structure coopère avec des moyens de fixation 7 dans le sol, par exemple dans la fondation du bâtiment par exemple il s'agit d'une vis de fondation.

L'extrémité supérieure du montant du sous-ensemble située en haut de la structure est destinée à coopérer avec des moyens de fixation à la partie supérieure du bâtiment, par exemple le débord de toiture ou un point haut de la façade.

En variante, on peut envisager un maintien de la structure sur la façade par l'intermédiaire de point d'ancrage aux angles des cadres situés à l'opposé du montant vertical 2. Ces points d'ancrage sont déportés de l'angle du bâtiment qui est une zone sur laquelle la fixation du fait de l'isolation extérieure peut être complexe.

Dans le cas où la fixation du mât ne peut être réalisée en partie haute et/ou basse du bâtiment, le mât peut être fixé directement dans la façade via par exemple deux équerres à 90° disposées sur l'angle du bâtiment. Dans le cas d'un bâtiment sans débord de toiture, le même principe de fixation en façade peut être mis en oeuvre en adaptant les points d'ancrage à la façade. De manière également avantageuse, la structure de rigidification sert de support à un convertisseur, par exemple de type micro-onduleur 8 du module qui sera décrit plus tard. La connexion entre le micro-onduleur et le module peut être filaire ou de type sans contact à transfert inductif.

Le montage de la structure photovoltaïque S1 va être décrit.

Par exemple un module M est fixé à chaque cadre et est raccordé électriquement à son micro-onduleur.

La vis de fondation est fixée dans la fondation en regard de l'arête reliant deux façades. De préférence, le mât est disposé à distance de la façade permettant au mât de travailler mécaniquement, par exemple du fait des vibrations dues au vent, des dilatations thermiques, sans entrer en contact avec la façade. La distance entre le mât et la façade est avantageusement de l'ordre de 10 mm. Le premier sous-ensemble est monté dans la vis de fixation, l'extrémité longitudinale inférieure du montant étant logée dans la vis de fixation, puis le deuxième sous-ensemble est monté dans le premier sous-ensemble en insérant l'extrémité longitudinale inférieure de son montant dans l'extrémité longitudinale supérieure du montant du premier sous-ensemble. Cette opération est répétée avec les autres sous-ensembles jusqu'à atteindre la hauteur souhaitée, de préférence jusqu'à atteindre le haut de la façade. L'assemblage des sous-ensembles est par exemple réalisé au moyen d'une nacelle élévatrice. L'extrémité longitudinale supérieure du dernier sous-ensemble assemblé est fixée au bâtiment, par exemple au débord de toit. Avantageusement l'assemblage des sous-ensembles assure automatiquement la connexion électrique des moyens de connexions électriques des sous-ensembles entre eux. La structure est reliée au réseau de distribution du bâtiment via un câble en haut ou en bas du mât.

Il peut être prévu des moyens de verrouillage des sous-ensembles entre eux. Par exemple, les sous-ensembles sont verrouillés entre eux via des goupilles traversant le mât. En variante, des vis traversant le mât peuvent également être utilisées pour solidariser deux sous-ensembles. En variante encore, un ou des systèmes autobloquants mécaniques pouvant être déverrouillés par un levier accessible lorsque le mat est monté peuvent être utilisées, ou des moyens assurant une sécurisation de l'assemblage par vissage.

On obtient alors une structure comportant un mât autoporteur auquel sont fixés des modules.

Dans le cas où les cadres sont montés mobiles en rotation autour de l'axe Z, les cadres de chaque sous-ensemble peuvent être rabattus contre une des façades, de sorte que la face arrière du module soit en regard de la façade, et est fixé à la façade. Cette fixation ne pose pas les problèmes de fixation de la structure à la façade, elle ne subit pas de cisaillement. On obtient la structure de la figure 3A.

Cette articulation en rotation présente l'avantage de pouvoir adapter facilement la structure à différentes valeurs d'angle. En outre elle permet d'utiliser les sous-ensembles pour habiller deux façades simultanément mais également d'habiller une seule façade en disposant les cadres entre eux de sorte qu'ils soient dans un même plan comme cela est représenté sur la figure 3B.

On peut envisager que chaque sous-ensemble présente à sa construction un angle fixe entre les cadres, par exemple un angle droit.

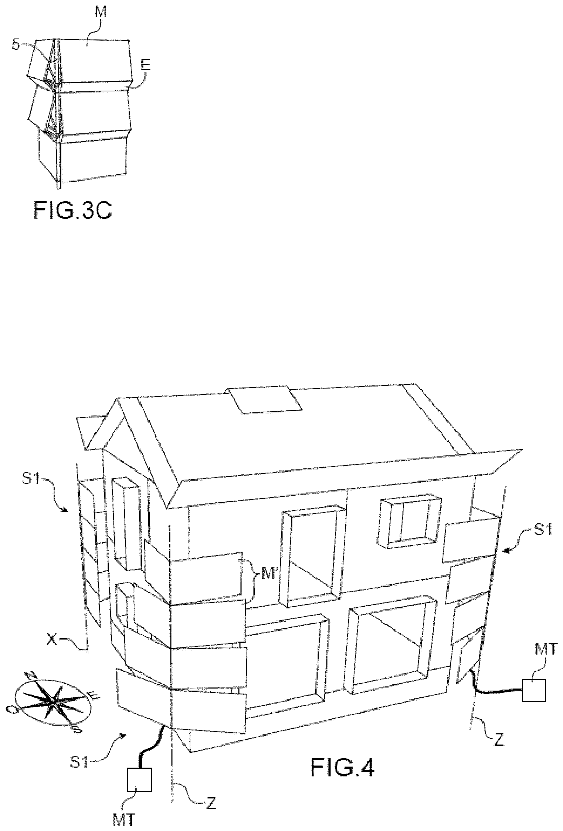

Sur la figure 3C, on peut voir une variante, dans laquelle les cadres sont inclinés par rapport à la verticale de sorte que les modules soient inclinés vers le haut par rapport à la verticale. Avantageusement un élément d'habillage 10 raccorde les bords horizontaux de deux modules M disposés l'un au-dessus de l'autre. L'élément d'habillage permet d'avoir un habillage continu améliorant l'esthétique de la structure photovoltaïque.

Sur la figure 4, on peut voir un exemple d'intégration de structures photovoltaïques S1 sur une maison individuelle.

Dans cet exemple au moins trois angles sont recouverts par les structures S1. La rose des vents indique l'orientation des façades. De préférence au moins les façades sud, est et ouest sont équipés de modules.

Dans l'exemple représenté, les modules sont avantageusement mobiles en rotation autour de l'axe Z par rapport aux façades par des moyens motorisés MT permettant une modification de l'orientation des modules au cours de la journée pour suivre le soleil. Par exemple, les modules de la structure S1 montée sur l'angle des façades sud-est, sont orientés de sorte que le matin ils soient orientés vers l'est et au cours de la journée ils soient orientés vers le sud. Ainsi la production d'électricité se répartit tout au long de la journée apportant davantage de puissance produite le matin et le soir par rapport à des modules fixes.

Tous les modules ou une partie d'entre eux peuvent être motorisés. Par exemple les modules situés à hauteur d'être humain peuvent être fixés aux façades afin de ne pas gêner la circulation autour de la maison.

Dans l'exemple représenté, tous les modules ont les mêmes dimensions. En variante ils présentent des dimensions différentes et s'adaptent à la présence d'ouvertures dans les façades, ce qui permet de maximiser la surface couverte par les modules. Par exemple sur la figure 4, les modules désignés M' pourraient être plus long dans la direction horizontale pour couvrir toute la surface entre l'angle et la fenêtre F.

En variante encore, chaque sous-ensemble comporte un seul module.

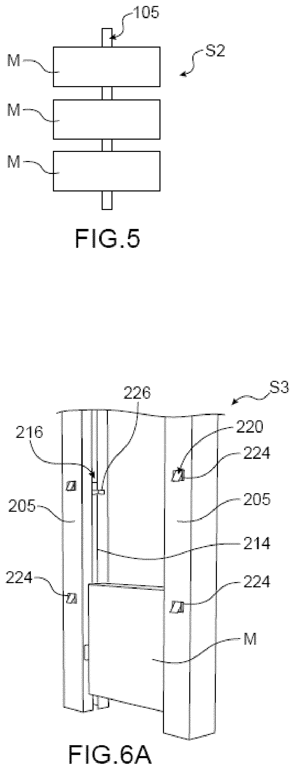

Dans l'exemple représenté sur la figure 5, les modules d'une façade sont orientables individuellement. En variante, ils sont solidaires en rotation et sont donc orientés en même temps.

Sur la figure 5, on peut voir un autre exemple de structure photovoltaïque destiné à être montée le long d'une façade.

La structure S2 comporte un mât 105 et des modules M fixés par leur face arrière sur le mât. Le mât 105 peut être réalisé en une seule pièce ou en plusieurs parties assemblées similaires aux montants des sous-ensembles de la structure S2.

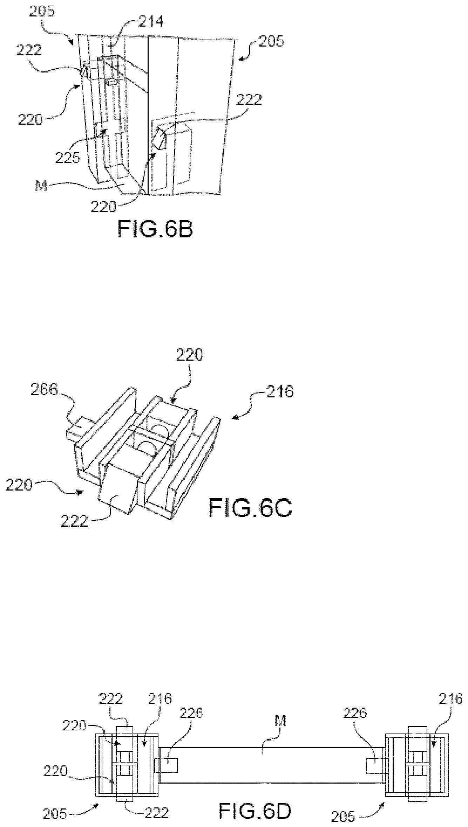

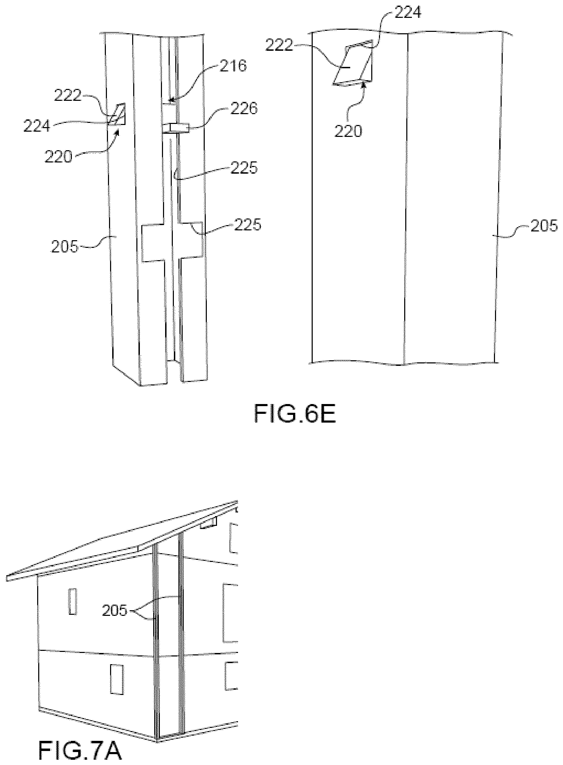

Sur les figures 6A à 6E, on peut voir un autre exemple de structure photovoltaïque S3.

Sur la figure 6A, la structure S3 est destinée à être disposée le long d'une façade.

La structure S3 comporte deux mâts 205 s'étendant verticalement et disposés parallèlement l'un par rapport à l'autre et séparés d'une distance dans la direction horizontale correspondant à la dimension dans la direction horizontale d'un module.

Les deux mâts sont de structure similaire, un seul sera décrit en détail.

Dans cet exemple, le mât 205 a une forme de parallélépipède rectangle de section transversale carrée dont la plus grande dimension est destinée à s'étendre verticalement. La plus grande dimension du mât est désignée « hauteur du mât ». Le mât comporte quatre faces s'étendant verticalement.

Dans l'exemple représenté, le mât est creux, il est par exemple obtenu par profilage ou extrusion.

Le mât comporte dans une des faces verticales une rainure 214 s'étendant verticalement sur toute la hauteur du mât.

L'intérieur du mât forme un rail ou glissière pour un chariot 216 qui sera décrit par la suite. La rainure 214 permet de connecter le chariot au module.

Lors de la mise en place de la structure les deux mâts sont disposés l'un par rapport à l'autre de sorte que leurs rainures 214 soient en regard.

La structure comporte également deux chariots 216, l'un configuré pour coulisser dans l'un des mâts et l'autre pour coulisser dans l'autre mât.

De manière très avantageuse, les chariots comportent des moyens de verrouillage automatique en position le long du mât.

Sur la figure 6C, on peut voir un chariot représenté seul.

Le chariot comporte un châssis 218 munies de deux doigts 220 alignés et repoussés l'un de l'autre vers l'extérieur au moyen d'un ressort interposé entre eux. De préférence, les dimensions extérieures du chariot sont sensiblement les dimensions intérieures du mât, ainsi le chariot est directement guidé par les faces intérieures du mât.

Les doigts 220 présentent une extrémité libre 222 en forme de rampe inclinée vers le bas dont la fonction sera décrite ci-dessous. Le mât comporte des paires de fenêtres 224. Chaque paire comporte une première fenêtre réalisée dans une face du mât perpendiculaire à celle comportant la rainure 214 et une deuxième fenêtre dans la face du mât à celle comportant la première fenêtre. Les fenêtres 224 d'une paire sont alignées horizontalement.

Les paires de fenêtres sont réparties le long de la hauteur du mât correspondant à une position d'un module. La distance entre deux fenêtres 224 successives dans la direction verticale correspond sensiblement à la dimension d'un module dans la direction verticale. Les paires de fenêtres 224 forment des positions autobloquantes.

Les mâts comportent en outre une fenêtre 225 dans la partie inférieure de la face comportant la rainure 214, pour l'introduction du chariot dans le mât.

Chaque chariot 214 comporte également une patte 226 permettant une fixation à un module.

La mise en place de la structure photovoltaïque S3 va maintenant être décrite. Sur les figures 7A à 7C, on peut voir représentées les différentes étapes de fabrication de la structure.

Les deux mâts 205 sont fixés le long d'une façade d'une habitation par leurs extrémités longitudinales inférieures dans le sol ou la fondation de l'habitation, et leurs extrémités longitudinales au débord du toit par exemple (figure 7A). De préférence et comme cela a été expliqué ci-dessus, de préférence les mâts sont disposés à distance de la façade, par exemple à une distance de l'ordre de 10 mm.

Le mât 205 qui n'est pas situé à l'angle du bâtiment est avantageusement fixé au sol et au débord du toit. En variante il peut être fixé sur la façade mais. De préférence le mât 205 situé à l'angle du bâtiment est fixé au sol et au débord du toit.

Les deux mâts sont positionnés l'un par rapport à l'autre de sorte que les rainures 214 soient en regard.

Dans chaque mât est monté un chariot 216 par une fenêtre 225 en rapprochant les doigts l'un de l'autre. Un module est fixé aux pattes 226 des chariots, par exemple par des ensembles vis-écrou.

Chaque chariot 214 peut alors coulisser verticalement dans un mât, les doigts étant rétractés. Lorsqu'un chariot se retrouve au niveau d'une paire de fenêtres, chaque doigt se trouve en face d'une fenêtre et les doigts 220 s'écartent l'un de l'autre sous l'action du ressort et font saillie chacun à travers la fenêtre 224 assurant un verrouillage en position verticale du chariot (figure 6D).

Du fait des profils des doigts, en exerçant un effort de poussée vers le haut sur les chariots, les doigts 220 se rétractent vers l'intérieur du mât, le chariot est libéré et peut se déplacer verticalement vers le haut jusqu'à atteindre la prochaine paire de fenêtres.

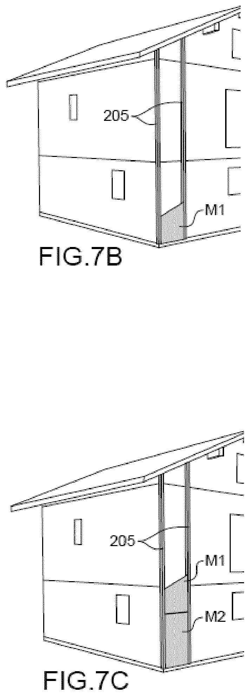

Sur la figure 7B, on peut voir le premier module M1 destiné à se trouver en haut de la façade mis en place entre les deux mâts au bas de ceux-ci. Ce module étant généralement à l'ombre du fait de l'avant-toit, il est formé de préférence d'un élément décoratif imitant avantageusement les modules photovoltaïques. Le module est coulissé vers le haut afin d'atteindre la première position autobloquante.

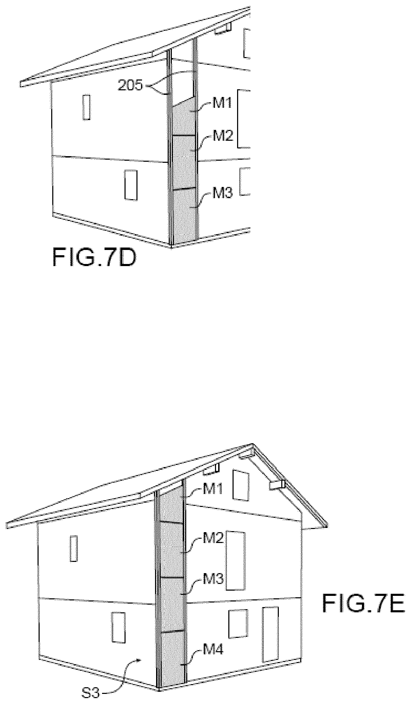

Un deuxième module M2 et ses chariots sont mis en place entre et dans les mâts (figure 7C). Le module est un module photovoltaïque. En exerçant un effort de poussée verticale vers le haut, le module M1 est également poussé vers le haut. Ces opérations avec d'autres modules M3, M4 sont répétées (figure 7D) jusqu'à ce que le module M1 atteigne sa position définitive en haut de la structure (figure 7E).

Grâce à la structure des chariots et les moyens de verrouillage les modules sécurisent la position des modules à chaque étape. En outre cette structure permet un assemblage en restant au sol sauf pour la fixation des mâts au débord du toit.

En outre l'installation de cette structure est relativement rapide.

En variante, chaque mât comporte une fenêtre située dans une face opposée à celle en regard de la façade permettant une introduction du chariot. Il est alors possible d'assembler les modules et les chariots préalablement à leur mise en place dans et entre les mâts.

En variante, le verrouillage en position verticale des charriots se fait manuellement par exemple par introduction de goupilles à travers les mâts et le maintien des modules sur les mâts.

Dans l'exemple de la structure S3, deux chariots sont mis en oeuvre par module. De préférence, quatre chariots sont mis en oeuvre, deux chariots fixés à chaque bord vertical d'un module améliorant le guidage de modules le long des mâts.

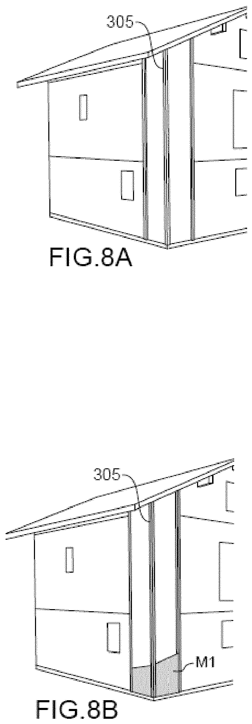

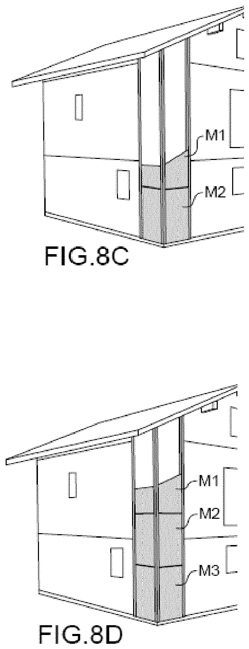

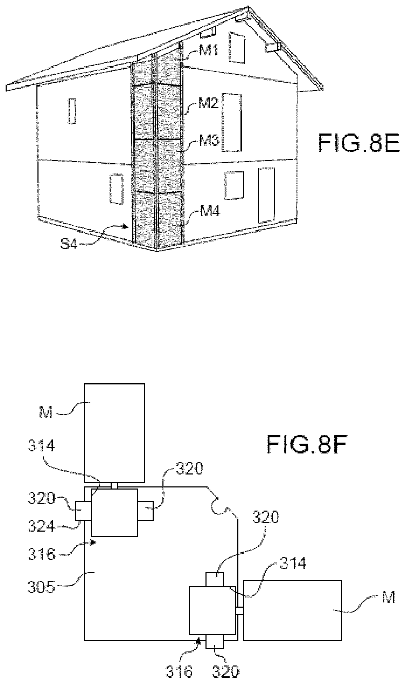

Sur la figure 8F, on peut voir une structure S4 adaptée à l'habillage d'un angle d'habitation de réalisation similaire à la structure S3, i.e. mettant en oeuvre des mâts formant glissières et des chariots.

Sur la figure 8F, one peut voir une vue en coupe transversale de la structure S4. La structure met en oeuvre des chariots 316 similaires aux chariots 216 de la structure S3. Le mât 305 est plein et comporte des rainures 314 formant glissière pour les chariots. Les rainures sont réalisées dans deux faces perpendiculaires du mât destiné à être perpendiculaires aux façades à couvrir. Des fenêtres traversantes 324 sont réalisées le long du mât 305, débouchent dans les rainures 3 14 et sont configurées pour recevoir un doigt 320 du chariot. Des encoches (non visibles) alignées avec les fenêtres sont réalisés à l'intérieur des rainures pour loger l'autre doigt 320 du chariot.

La fabrication de la structure S4 est similaire à celle de la structure S3. Les différentes étapes sont représentées sur les figures 8A à 8E.

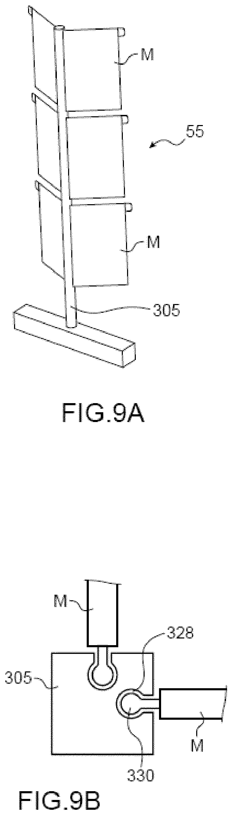

Sur les figures 9A et 9B, on peut voir un autre exemple de structure S5 comportant un mât 305 et des modules M, la liaison mécanique entre les modules et le mât étant du type queue-d'aronde ou rotule. Par exemple le mât comporte une rainure 328 s'étendant verticalement, formant une mortaise et les modules comportant chacun un tenon 330 qui est coulissé dans la mortaise.

Des moyens d'immobilisation en position verticale des modules sont prévus, par exemple ces moyens comportent une goupille traversant le mât, le poids de chaque module venant reposer sur cette goupille.

Des modules sont montés de part et d'autre du mât le long de son axe vertical.

Dans l'exemple représenté, les rainures sont orientées l'une par rapport à l'autre de sorte que les modules d'un côté de l'axe vertical soient orientés perpendiculairement aux modules situés de l'autre côté de l'axe vertical. La structure est adaptée à couvrir l'angle d'une habitation.

Toute autre orientation angulaire relative entre les modules est envisageable. Par exemple les modules peuvent former entre eux un angle compris entre 90° et 180°.

Dans l'exemple représenté, un seul mât est mis en oeuvre. En variante, les modules peuvent être supportés par deux mâts.

A titre d'exemple, pour des structures destinées à habiller une habitation avec 1 étage, dans le cas d'un mât de section circulaire il présente un diamètre de 60 mm et une épaisseur de matière de quelques mm, et dans cas d'un mât creux de section carrée, la section présente les dimensions extérieures de 60 mm× 60 mm pour et une épaisseur de matière de quelques mm.

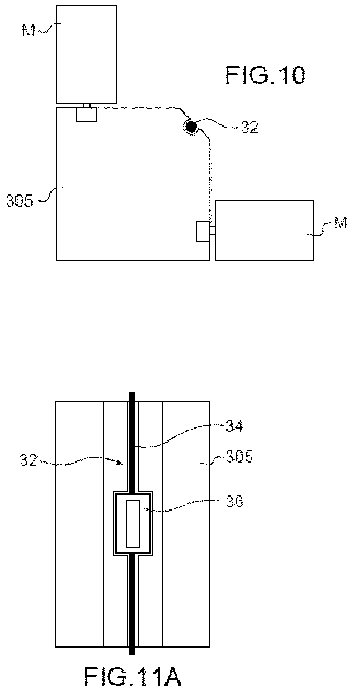

De manière particulièrement avantageuse, la connectique électrique est intégrée dans le ou les mâts facilitant le montage. Par exemple dans le cas d'une structure habillant un angle, la connectique est de préférence montée dans le mât 305 situé à l'angle du bâtiment. Sur la figure 10, on peut voir une vue en coupe transversale d'un exemple de structure dans lequel la connectique 32 est logée dans une rainure longitudinale réalisée dans le mât. Dans cet exemple le mât a une section carrée avec un angle biseauté destiné à être en regard de l'angle et la rainure logeant la connectique 32 est réalisée dans l'angle biseauté.

La connexion électrique entre le module et la connectique est avantageusement automatique par montage du module sur le mât.

Par ailleurs, les modules montés sur les façades subissent des ombrages fréquents. De manière avantageuse, chaque module est alors équipé d'un convertisseur statique pour améliorer le rendement de production. L'utilisation d'un tel convertisseur permet directement un raccordement en 230 V, ce qui simplifie le réseau électrique.

Par exemple le convertisseur est un convertisseur de type micro-onduleur.

De manière très avantageuse, dans le cas de micro-onduleurs, le raccordement est obtenu par un câble 34 monophasé 230V et des connecteurs 36 étanches pour chaque module. Les connecteurs 36 sont distribués le long du câble. Par exemple un surmoulage des connecteurs est réalisé afin de garantir leur étanchéité.

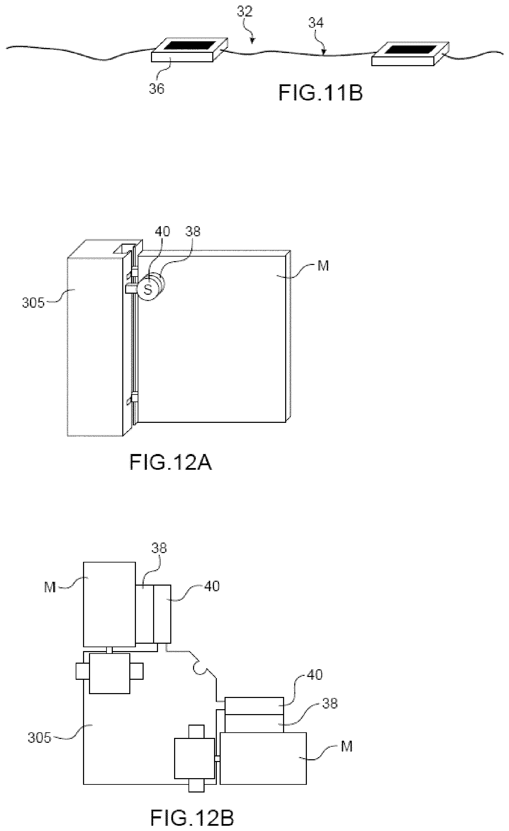

Sur les figures 11A, on peut voir le câble 34 et les connecteurs 36 seul et sur la figure 11B, on peut voir le câble 34 et les connecteurs 36 intégrés au mât.

Dans un exemple particulièrement avantageux représenté sur les figures 12A et 12B, les convertisseurs mis en oeuvre sont des convertisseurs sans contact à transfert inductif simplifiant la réalisation des connexions électriques dans la structure S4.

Par exemple, chaque module porte sur sa face arrière un primaire 38 et le mât porte de manière fixe à chaque emplacement d'un module un secondaire 40. Le primaire et le secondaire sont positionnés de sorte que, lors du montage du module sur le mât à son emplacement, le primaire se trouve en regard du secondaire permettant les transferts inductifs. Le câble reliant les secondaires est intégré au mât, par exemple comme le câble 34 sur la figure 10.

Le module coulisse verticalement dans la rainure du mât et lorsqu'il atteint son emplacement le primaire se situe automatiquement en face du secondaire. Aucune action de connexion supplémentaire n'est requise. Dans l'exemple représenté, le primaire se trouve dans une partie supérieure du module. Avantageusement des moyens de détrompage sont prévus pour positionner correctement le module par rapport au mât et assurer que le primaire soit en regard du secondaire.

Selon une variante avantageuse, le primaire est situé dans une zone médiane du module, ainsi le primaire se trouve toujours en regard du secondaire.

Par exemple dans le cas de la structure des figures 12A et 12B, l'assemblage de cette structure est particulièrement rapide puisque la connectique électrique est réalisée simultanément au montage des modules et automatiquement. Tout est préparé en atelier permettant sur place un temps d'assemblage réduit. La personne effectuant la pose fait coulisser les modules le long du ou des modules et lorsqu'ils sont à la position souhaitée, ils se connectent électriquement.

La mise en oeuvre de convertisseurs sans contact à transfert inductif limite les risques de mauvais câblage, simplifie et fiabilise le raccordement, en effet il n'y a pas de risque de se tromper de polarité, et les risques de corrosion sont réduits. En outre, une grande discrétion d'intégration est obtenue, puisque la quantité de câble requise est réduite.

Ces convertisseurs étant bidirectionnels, ils offrent avantageusement la possibilité d'intégrer d'autres fonctionnalités à la structure. En effet, il peut être envisagé de remplacer certains modules par des éléments permettant d'émettre de la lumière, par exemple des diodes électroluminescentes pour éclairer une terrasses, voire d'intégrer les diodes aux modules photovoltaïques, par des éléments lumineux à des fins de décoration, par des éléments remplissant des fonctions de service au bâtiment, telles la ventilation, le stockage de l'énergie..., ou des éléments réfléchissants permettant de rediriger l'énergie solaire vers d'autres bâtiments.

La mise en oeuvre de modules présentant des fonctions additionnelles, voire différentes de celle des modules photovoltaïques s'appliquent à tous les exemples de réalisation, que des convertisseurs, en particulier sans contact, soient utilisés ou non.

La structure photovoltaïque selon l'invention est particulièrement adaptée à la mise en oeuvre des modules bifaciaux, i.e. qui convertissent la lumière en électricité sur leurs deux faces. De tels modules permettent d'augmenter la quantité d'énergie qui peut être produite, par exemple elle peut être augmentée de 5% à 20%.

Pour cela, la ou les façades est ou sont recouvert(es) d'un enduit clair ou d'une peinture claire, qui réfléchit le rayonnement sur l'arrière des modules bifaciaux. En outre grâce à la structure selon l'invention, les modules ne sont pas collés à la façade mais il existe en général un jeu de 1 cm à plusieurs cm entre la façade et la face du module en regard. Ainsi la lumière peut passer et le coefficient de bifacialité est augmenté. En outre, le rendement des modules peut être amélioré par un refroidissement efficace par convection naturelle dans la lame d'air entre la façade et le module.

Un exemple pratique va maintenant être décrit.

Une maison individuelle est équipée à ses 4 angles de structures photovoltaïques selon l'invention. La maison a un plan au sol rectangulaire avec quatre façades, chacune orientée vers un point cardinal.

Une telle installation permet de générer une puissance crête installée de l'ordre de 7kWc, ce qui est suffisant pour alimenter un logement moyen classique, voire pour recharger un véhicule électrique.

De plus, le fait de disposer des modules sur quatre orientations différentes permet de répartir la production au cours de la journée en modifiant le profil de production. Cela permet de « lisser » et « étaler » la production sur la journée, réduisant ainsi l'impact néfaste d'un « pic » de production en milieu de journée. Elle permet ainsi de proposer davantage d'énergie le matin et le soir et de correspondre davantage aux besoins en énergie du logement.

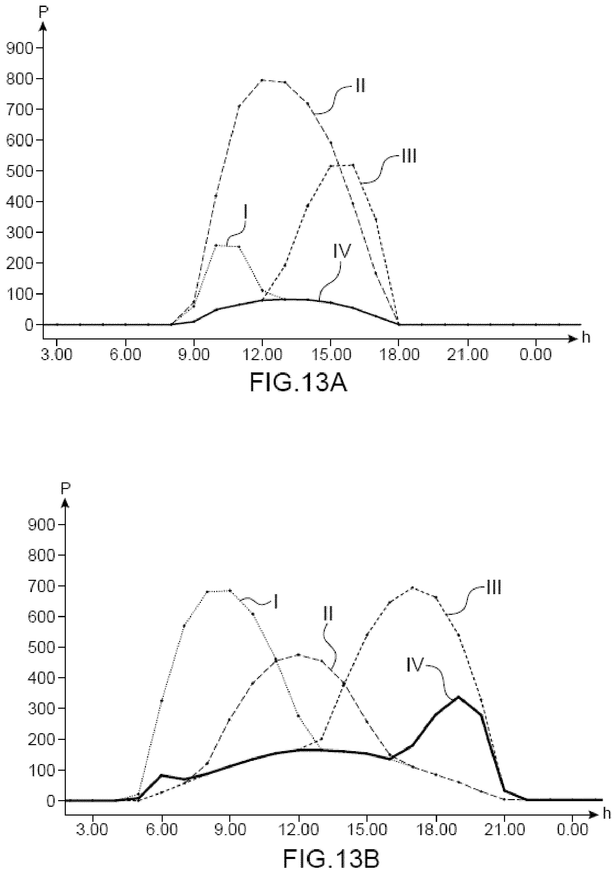

Sur les figures 13A et 13B, on peut voir la puissance produite (en Watt au mois de janvier et au mois de juin respectivement tout au long de la journée. La courbe I représente la puissance produite par les modules de la structure sur la façade est, la courbe Il représente la puissance produite par les modules de la structure sur la façade sud, la courbe III représente la puissance produite par les modules de la structure sur la façade ouest, et la courbe IV représente la puissance produite par les modules de la structure sur la façade nord.

Grâce aux structures selon l'invention, la production se répartit entre les façades amenant davantage de puissance produite en début et en fin de journée. La production solaire intervenant davantage à des moments où les occupants de la maison consomment de l'énergie, le taux d'autoconsommation de l'énergie est amélioré.

L'invention permet d'intégrer des modules aux façades de manière harmonieuse tout en tenant compte des contraintes de construction, notamment la présence d'isolant extérieur. Elle permet de faciliter la pose des modules et de réduire le temps de pose des modules. En outre elle permet de combiner les fonctions en utilisant des modules ayant plusieurs fonctions et/ou en combinant des modules photovoltaïques avec des modules remplissant d'autres fonctions. Par ailleurs, la structure photovoltaïque offre un haut niveau de sécurité notamment au regard du risque incendie car le dispositif n'est pas intégré dans la toiture.

Elle permet également d'augmenter la part d'autoconsommation en équipant plusieurs angles d'une habitation. De plus elle permet de réduire l'impact carbone par l'utilisation limitée de matériaux de structure.

La structure photovoltaïque est particulièrement adaptée pour habiller les façades de maisons individuelles, mais elle s'applique également aux façades d'immeubles collectifs, aux façades de bâtiments industriels et aux façades de bâtiments de bureau.

## Revendications

1. Structure photovoltaïque destinée à couvrir au moins une partie d'une façade d'un bâtiment, comportant au moins un mât (5, 105, 205, 305) présentant un axe longitudinal destiné à être orienté verticalement et des modules photovoltaïques (M) fixés au mât, ledit mât (5, 105, 205, 305) étant autoporteur et comportant une première extrémité longitudinale inférieure configurée pour être fixée au sol et une deuxième extrémité longitudinale supérieure configurée pour être fixée à une partie supérieure du bâtiment,
**caractérisée en ce qu'**elle comporte des premiers modules photovoltaïques d'un côté de l'axe longitudinal du mât, et des deuxièmes modules photovoltaïques de l'autre côté de l'axe longitudinal du mât, les premiers et deuxièmes modules photovoltaïques étant orientés l'un par rapport à l'autre de sorte à former entre eux un angle, et de sorte que lorsque le mât est monté le long d'un angle du bâtiment, les premiers modules photovoltaïques couvrent une partie d'une première façade et les deuxièmes modules photovoltaïques couvrent une partie d'une deuxième façade, la première et la deuxième façades se rejoignant au niveau dudit angle.

2. Structure photovoltaïque selon la revendication 1, comportant des moyens de connexion électrique des modules photovoltaïques à une installation extérieure intégrés dans le au moins un mât.

3. Structure photovoltaïque selon la revendication 1 ou 2, dans laquelle les modules photovoltaïques sont montés mobiles en rotation sur le mât autour de l'axe longitudinal du mât de sorte à pouvoir modifier leur orientation angulaire autour du mât, la structure photovoltaïque comportant notamment des moyens motorisés configurés pour modifier l'orientation des modules photovoltaïques.

4. Structure photovoltaïque selon l'une des revendications 1 à 3, dans laquelle le au moins un mât (205, 305) et les modules photovoltaïques sont configurés de sorte que les modules photovoltaïques (M) soient aptes à coulisser verticalement le long du mât (205, 305) jusqu'à atteindre l'emplacement souhaité, la structure photovoltaïque comportant notamment au moins une rainure (214, 314) longitudinale formée dans le mât, au moins un chariot (216, 316) monté coulissant dans la rainure (214, 314), un module photovoltaïque (M) étant fixé au chariot (216, 316), et des moyens de verrouillage du module le long du mât (205, 305), et optionnellement dans laquelle les moyens de verrouillage comportent au moins un doigt (220) porté par le chariot, ledit doigt (220) mobile dans une direction transversale à l'axe longitudinal du mât (205) et rappeler élastiquement vers l'extérieur, et des fenêtres (224) dans le mât aux différents emplacements des modules photovoltaïques le long du mât, ledit doigt (220) étant configuré pour coopérer avec lesdites fenêtre (224) est verrouiller le module à l'emplacement de ladite fenêtre (224), et optionnellement encore dans laquelle les moyens de verrouillage sont unidirectionnels, les moyens de verrouillage permettant un déplacement dans un sens du chariot (214) sous l'effet d'un effort dans ledit sens de déplacement le long de la direction longitudinale du mât (205).

5. Structure photovoltaïque selon l'une des revendications précédentes, comportant au moins un autre mât de sorte que les modules photovoltaïques soient maintenus par deux bords opposés parallèles.

6. Structure photovoltaïque selon l'une des revendications précédentes, comportant un convertisseur pour chaque module photovoltaïque, et optionnellement dans laquelle le convertisseur est un convertisseur sans contact à transfert inductif, comportant un primaire sur une face arrière du module photovoltaïque et un secondaire sur le mât et dans lequel lorsque le module photovoltaïque est monté sur le mât le primaire est automatiquement en regard du secondaire.

7. Structure photovoltaïque selon l'une des revendications 1 à 6, comportant un module présentant une fonction supplémentaire par rapport aux modules photovoltaïques ou une fonction différente de celle des modules photovoltaïques.

8. Structure photovoltaïque selon l'une des revendications précédentes, dans laquelle les modules photovoltaïques sont aptes à convertir l'énergie lumineuse sur leurs deux faces.

9. Bâtiment comportant plusieurs façades, au moins une structure photovoltaïque selon l'une des revendications 1 à 8 recouvrant au moins une partie d'au moins une façade dudit bâtiment, le au moins un mât étant fixé au sol et à une partie supérieure du bâtiment, et comportant notamment une structure photovoltaïque à chaque angle.

10. Bâtiment selon la revendication 9, comportant une couche d'isolation thermique formant une façade extérieure, dans lequel la première extrémité longitudinale du au moins un mât est fixée dans une semelle de fondation et dans lequel la deuxième extrémité longitudinale du au moins un mât est fixé à un débord du toit.

11. Bâtiment selon l'une des revendications 9 à 10, dans lequel la au moins une structure est posée par rapport à une façade de sorte qu'un jeu existe entre une face arrière des modules photovoltaïques et la façade du bâtiment, par exemple de l'ordre d'un centimètre à quelques centimètres.

12. Procédé d'habillage d'au moins une partie d'au moins une façade d'un bâtiment avec une structure photovoltaïque selon l'une des revendications 1 à 8 :
- fixation d'un mât le long d'une façade par sa première extrémité longitudinale inférieure et par sa deuxième extrémité longitudinale,
- fixation de modules photovoltaïques le long du mât.

13. Procédé d'habillage selon la revendication précédente, dans lequel le mât comporte plusieurs sous-ensembles, un premier sous-ensemble étant fixe au sol et les autres sous-ensembles étant empilés sur le premier sous-ensemble, et dans lequel les modules photovoltaïques sont fixés sur les sous-ensembles avant ou après leur empilage, et optionnellement dans dans lequel le mât est un seul tenant et les modules photovoltaïques sont fixés le long du mât après la fixation du mât le long de la façade.

14. Procédé d'habillage selon l'une des revendications 12 et 13 en combinaison avec la revendication 2, comportant une étape de connexion électrique des modules photovoltaïques en vue d'une connexion vers une installation extérieure, ladite étape ayant lieu simultanément à l'assemblage mécanique de la structure, et optionnellement dans lequel le au moins un mât est disposé le long d'un angle entre deux façades.

15. Procédé d'habillage selon l'une des revendications 12 à 13 en combinaison avec la revendication 4, dans lequel au moins un module est monté dans le mât au niveau d'une partie inférieure du mât et est poussé vers le haut jusqu'à atteindre son emplacement final.

## Patentansprüche

1. Photovoltaikstruktur, die bestimmt ist, um mindestens einen Bereich einer Gebäudefassade zu bedecken, mindestens einen Mast (5, 105, 205, 305) beinhaltend, der eine Längsachse aufweist, die bestimmt ist, vertikal ausgerichtet zu werden, und Photovoltaikmodule (M), die am Mast befestigt sind, wobei der Mast (5, 105, 205, 305) selbsttragend ist und ein erstes unteres Längsende beinhaltet, das konfiguriert ist, um am Boden befestigt zu werden, und ein zweites oberes Längsende, das konfiguriert ist, um an einem oberen Bereich des Gebäudes befestigt zu werden,
**dadurch gekennzeichnet, dass** sie erste Photovoltaikmodule auf einer Seite der Längsachse des Mastes und zweite Photovoltaikmodule auf der anderen Seite der Längsachse des Mastes beinhaltet, wobei die ersten und zweiten Photovoltaikmodule so zueinander ausgerichtet sind, dass sie eine Ecke miteinander bilden, und dass, wenn der Mast entlang einer Ecke des Gebäudes montiert wird, die ersten Photovoltaikmodule einen Bereich einer ersten Fassade bedecken und die zweiten Photovoltaikmodule einen Bereich einer zweiten Fassade bedecken, wobei sich die erste und die zweite Fassade auf dem Niveau der Ecke treffen.

2. Photovoltaikstruktur nach Anspruch 1, Mittel zum elektrischen Anschluss der Photovoltaikmodule an eine externe Anlage beinhaltend, die in den mindestens einen Mast integriert ist.

3. Photovoltaikstruktur nach Anspruch 1 oder 2, wobei die Photovoltaikmodule drehbar um die Längsachse des Mastes beweglich am Mast montiert sind, um ihre Winkelausrichtung um den Mast herum verändern zu können, wobei die Photovoltaikstruktur insbesondere motorisierte Mittel beinhaltet, die konfiguriert sind, um die Ausrichtung der Photovoltaikmodule zu verändern.

4. Photovoltaikstruktur nach einem der Ansprüche 1 bis 3, wobei mindestens ein Mast (205, 305) und die Photovoltaikmodule so konfiguriert sind, dass die Photovoltaikmodule (M) geeignet sind, vertikal dem Mast (205, 305) entlang zu gleiten, bis die gewünschte Position erreicht wird, wobei die Photovoltaikstruktur insbesondere mindestens eine Längsnut (214, 314) beinhaltet, die am Mast gebildet ist, wobei mindestens ein montierter Schlitten (216, 316) in der Nut (214, 314) gleitet, wobei ein Photovoltaikmodul (M) am Schlitten (216, 316) befestigt ist und Verriegelungsmittel des Moduls entlang dem Mast (205, 305), und wobei optional die Verriegelungsmittel mindestens einen Finger (220) beinhalten, der vom Schlitten getragenen wird, wobei der Finger (220) in einer Richtung quer zur Längsachse des Mastes (205) beweglich ist und elastisch nach außen rückstellbar, und Fenster (224) im Mast an den verschiedenen Positionen der Photovoltaikmodule entlang des Mastes, wobei der Finger (220) konfiguriert ist, um mit den Fenstern (224) zusammenzuwirken und das Modul an der Position des Fensters (224) zu verriegeln, und wobei, erneut optional, die Verriegelungsmittel unidirektional sind, wobei die Verriegelungsmittel eine Verschiebung in einer Richtung des Schlittens (214) ermöglichen unter Einwirkung einer Kraft in der Verschiebungsrichtung entlang der Längsrichtung des Mastes (205).

5. Photovoltaikstruktur nach einem der vorhergehenden Ansprüche, die mindestens einen weiteren Mast beinhaltet, so dass die Photovoltaikmodule von zwei parallelen gegenüberliegenden Kanten gehalten werden.

6. Photovoltaikstruktur nach einem der vorhergehenden Ansprüche, einen Konverter für jedes Photovoltaikmodul beinhaltend, und wobei optional der Konverter ein kontaktloser Konverter mit induktiver Übertragung ist, eine Primäre auf der hinteren Seite des Photovoltaikmoduls beinhaltet und eine Sekundäre auf dem Mast, und wobei, wenn das Photovoltaikmodul am Mast montiert ist, die Primäre automatisch der Sekundären zugewandt ist.

7. Photovoltaikstruktur nach einem der Ansprüche 1 bis 6, ein Modul beinhaltend, das eine zusätzliche Funktion mit Bezug auf die Photovoltaikmodule aufweist oder eine andere Funktion als die der Photovoltaikmodule.

8. Photovoltaikstruktur nach einem der vorhergehenden Ansprüche, wobei die Photovoltaikmodule geeignet sind, Lichtenergie auf ihren beiden Seiten zu konvertieren.

9. Gebäude, mehrere Fassaden beinhaltend, wobei mindestens eine Photovoltaikstruktur nach einem der Ansprüche 1 bis 8 mindestens einen Bereich mindestens einer Fassade des Gebäudes abdeckt, wobei der mindestens eine Mast am Boden und an einem oberen Bereich des Gebäudes befestigt ist, und insbesondere an jeder Ecke eine Photovoltaikstruktur beinhaltet.

10. Gebäude nach Anspruch 9, eine Wärmedämmschicht beinhaltend, die eine Außenfassade bildet, wobei das erste Längsende des mindestens einen Mastes an einem Streifenfundament befestigt ist, und wobei das zweite Längsende des mindestens einen Mastes an einem Überstand des Daches befestigt ist.

11. Gebäude nach einem der Ansprüche 9 bis 10, wobei die mindestens eine Struktur in Bezug auf eine Fassade so verlegt ist, dass zwischen einer hinteren Seite der Photovoltaikmodule und der Fassade des Gebäudes ein Zwischenraum besteht, beispielsweise in der Größenordnung von einem Zentimeter bis zu einigen Zentimetern.

12. Verfahren zum Verkleiden mindestens eines Bereichs mindestens einer Gebäudefassade mit einer Photovoltaikstruktur nach einem der Ansprüche 1 bis 8:
- Befestigung eines Mastes entlang einer Fassade durch sein erstes unteres Längsende und durch sein zweites Längsende,
- Befestigung von Photovoltaikmodulen entlang des Mastes.

13. Verkleidungsverfahren nach dem vorhergehenden Anspruch, wobei der Mast mehrere Unterbaugruppen beinhaltet, wobei eine erste Unterbaugruppe am Boden befestigt ist und die anderen Unterbaugruppen auf der ersten Unterbaugruppe aufgetürmt werden, und wobei die Photovoltaikmodule vor oder nach dem Auftürmen an den Unterbaugruppen befestigt werden, und wobei optional der Mast einstückig ist und die Photovoltaikmodule entlang des Mastes befestigt werden, nachdem der Mast entlang der Fassade befestigt wurde.

14. Verkleidungsverfahren nach einem der Ansprüche 12 und 13 in Kombination mit Anspruch 2, einen Schritt des elektrischen Anschlusses der Photovoltaikmodule beinhaltend, im Hinblick auf einen Anschluss an eine externe Anlage, wobei dieser Schritt gleichzeitig mit dem mechanischen Zusammenbau der Struktur stattfindet, und wobei optional der mindestens eine Mast entlang einer Ecke zwischen zwei Fassaden angeordnet ist.

15. Verkleidungsverfahren nach einem der Ansprüche 12 bis 13 in Kombination mit Anspruch 4, wobei mindestens ein Modul auf dem Niveau eines unteren Bereichs des Mastes am Mast montiert wird, und nach oben gedrückt wird, bis es seine endgültige Position erreicht.

## Claims

1. A photovoltaic structure for covering at least one part of a facade of a building, including at least one mast (5, 105, 205, 305) having a longitudinal axis for being vertically oriented and photovoltaic modules (M) attached to the mast, said mast (5, 105, 205, 305) being self-supporting and including a lower first longitudinal end configured to be attached to the ground and an upper second longitudinal end configured to be attached to an upper part of the building,
**characterised in that** it includes first photovoltaic modules on a side of the longitudinal axis of the mast, and second photovoltaic modules on the other side of the longitudinal axis of the mast, the first and second photovoltaic modules being oriented relative to each other so as to form an angle to each other, and so that when the mast is mounted along an angle of the building, the first photovoltaic modules cover a part of a first facade and the second photovoltaic modules cover a part of a second facade, the first and second facades joining together at said angle.

2. The photovoltaic structure according to claim 1, including means for electrically connecting the photovoltaic modules to an external facility which are integrated into the at least one mast.

3. The photovoltaic structure according to claim 1 or 2, wherein the photovoltaic modules are rotatably movably mounted to the mast about the longitudinal axis of the mast so as to be able to modify their angular orientation about the mast, the photovoltaic structure especially including motor-driven means configured to modify orientation of the photovoltaic modules.

4. The photovoltaic structure according to one of claims 1 to 3, wherein the at least one mast (205, 305) and the photovoltaic modules are configured so that the photovoltaic modules (M) are capable of vertically sliding along the mast (205, 305) until reaching the desired location, the photovoltaic structure especially including at least one longitudinal groove (214, 314) formed in the mast, at least one carriage (216, 316) slidably mounted in the groove (214, 314), a photovoltaic module (M) being attached to the carriage (216, 316), and means for locking the module along the mast (205, 305), and optionally wherein the locking means include at least one finger (220) carried by the carriage, said finger (220) being movable in a transverse direction to the longitudinal axis of the mast (205), and outwardly elastically returned, and windows (224) in the mast at the different locations of the photovoltaic modules along the mast, said finger (220) being configured to cooperate with said windows (224) and lock the module at the location of said window (224), and further optionally wherein the locking means are unidirectional, the locking means allowing movement in a sense of the carriage (214) under the effect of a force in said sense of movement along the longitudinal direction of the mast (205).

5. The photovoltaic structure according to one of the preceding claims, including at least one further mast so that the photovoltaic modules are held by two parallel opposite edges.

6. The photovoltaic structure according to one of the preceding claims, including a converter for each photovoltaic module, and optionally wherein the converter is an inductive contactless converter, including a primary on a rear face of the photovoltaic module and a secondary on the mast and wherein when the photovoltaic module is mounted to the mast, the primary automatically faces the secondary.

7. The photovoltaic structure according to one of claims 1 to 6, including a module having an additional function relative to the photovoltaic modules or a different function from the photovoltaic modules.

8. The photovoltaic structure according to one of the preceding claims, wherein the photovoltaic modules are capable of converting light energy on their two faces.

9. A building including several facades, at least one photovoltaic structure according to one of claims 1 to 8 covering at least one part of at least one facade of said building, the at least one mast being attached to the ground and to an upper part of the building, and especially including a photovoltaic structure at each angle.

10. The building according to claim 9, including a thermal insulation layer forming an external facade, wherein the first longitudinal end of the at least one mast is attached into a spread footing and wherein the second longitudinal end of the at least one mast is attached to an overhang of roof.

11. The building according to one of claims 9 to 10, wherein the at least one structure is put relative to a facade so that there is a clearance between a rear face of the photovoltaic modules and the facade of the building, for example in the order of one centimetre to a few centimetres.

12. A method for cladding at least one part of at least one facade of a building with a photovoltaic structure according to one of claims 1 to 8:
- attaching a mast along a facade through its lower first longitudinal end and through its second longitudinal end,
- attaching photovoltaic modules along the mast.

13. The cladding method according to the preceding claim, wherein the mast includes several subassemblies, a first subassembly being fixed on the ground and the other subassemblies being stacked on the first subassembly, and wherein the photovoltaic modules are attached to the subassemblies before or after being stacked, and optionally wherein the mast is made as one piece and the photovoltaic modules are attached along the mast after attaching the mast along the facade.

14. The cladding method according to one of claims 12 to 13 in combination with claim 2, including a step of electrically connecting the photovoltaic modules for the purpose of connecting to an external facility, said step occurring simultaneously to mechanically assembling the structure, and optionally wherein the at least one mast is disposed along an angle between two facades.

15. The cladding method according to one of claims 12 to 13 in combination with claim 4, wherein at least one module is mounted into the mast at a lower part of the mast and is pushed upwardly until it reaches its final location.
